# EUROPÄISCHE PATENTSCHRIFT

(11) **EP 2 898 975 B1**
(45) Veröffentlichungstag und Bekanntmachung des Hinweises auf die Patenterteilung: **19.07.2017**
(21) Anmeldenummer: 13005851.4
(22) Anmeldetag: 24.01.2014
(51) Int. Cl.: B23H 9/00, F22B 37/00, B23H 1/00

(54) **Erodiervorrichtung und Erodierverfahren zur Bearbeitung hohlzylindrischer Werkstücke**
Eroding device and eroding method for processing hollow cylindrical workpieces
Dispositif d'érosion et procédé d'érosion pour l'usinage de pièces cylindriques creuses

(43) Veröffentlichungstag der Anmeldung: 29.07.2015
(73) Patentinhaber: Westinghouse Electric Germany GmbH, 68167 Mannheim (DE)
(72) Erfinder: Eckert, Marko, 67227 Frankenthal (DE)
(74) Vertreter: Eickmeyer, Dietmar

(56) Entgegenhaltungen:
- DE-A1- 3 045 443
- DE-A1-102012 025 373
- FR-A1- 2 591 922
- JP-A- H0 751 947
- JP-A- 2001 018 125
- US-A- 4 476 368
- US-A- 5 317 607

## Beschreibung

Die Erfindung betrifft eine Erodiervorrichtung sowie ein Erodierverfahren zumBearbeiten hohlzylindrischer Werkstücke,mit welchen geometrische Formen in hohlzylindrische, insbesondere in einer kerntechnischen Anlage oder Reaktoranlage verbaute Werkstücke, wie beispielsweise Rohre oder Leitungen, eingebracht oder diese Werkstücke in verbautem beziehungsweise eingebauten Zustand getrennt beziehungsweise abgeschnitten oder angeschnitten werden können.

In kerntechnischen Anlagen und insbesondere bei Druckwasserreaktoren kommt es aufgrund der starken Beanspruchung der Heizrohre, welche die Schnittstelle zwischen dem Primärkreislauf und dem Sekundärkreislauf, nämlich dem Wasser-Dampfkreislauf in einem Kernkraftwerk mit Druckwasserreaktor (DWR) bilden und wobei der Wärmeaustausch zwischen den beiden Kreisläufen mittels der Heizrohre erfolgt, häufig zu korrosiven Schädigungen der Rohrwandungen. Schreiten die Schädigungen im Leistungsbetrieb unerkannt immer weiter fort, kann dies bis hin zur Wanddurchdringung und ggf. Rissbildung führen, wobei aufgrund der vorherrschenden differierenden Druckverhältnisse in beiden Kreisläufen durch den Wandungsschaden ein Übergang vom Primärkühlmittel in den Wasser-Dampf-Kreislauf erfolgen und in Folge auch zu einer Kontamination des Sekundärkreislaufs führen kann. Demgemäß handelt es sich bei derartigen Schäden gleichwohl um sicherheitstechnisch relevante Schäden die durchaus zu einem Störfall führen können. Eine frühzeitige und damit auch rechtzeitige Erkennung der sich anbahnenden Schädigung des Rohrleitungssystems - vor Eintreten einer vorbeschriebenen Leckage - ist mit bekannten Methoden der zerstörungsfreien Prüfung jedoch nicht hinreichend durchführbar und gewährleistbar.

Eingedenk der geschilderten Sachverhalte werden aufgrund der in kerntechnischen Anlagen häufiger auftretenden Probleme in den Dampferzeugern (primäre Wärmetauscher) und insbesondere im jeweiligen Rohrleitungssystem in mehr oder minder regelmäßigen zeitlichen Abständen Reparaturen und Materialentnahmen der geschädigten Bereiche und Stellen durchgeführt, welche sich aufgrund der äußeren Umstände jedoch als äußerst schwierig erweisen, um die Problementstehungsmechanismen beziehungsweise -ursachen der korrosiven Schädigungen zu ergründen und aufzudecken. Wegen der vergleichsweise hohen Strahlenbelastung und damit dem vergleichsweise hohen Gefährdungspotential für das Betriebspersonal der kerntechnischen Anlage sind die jeweiligen Leitungs- und Rohrstücke mechanisiert und/oder automatisiert zu entnehmen. Aufgrund der Komplexität der Rohrleitungssysteme und demgemäß eingeschränkten Zugänglichkeit sind herkömmliche Trennverfahren, wie beispielsweise ein von außen angesetztes mechanisches Trennen ähnlich dem Rohrschneiden beim Heizungsbau, bei welchem von außen nach innen gearbeitet wird, nur bedingt einsetzbar. Zudem erfordert die mechanische Bearbeitung, dass vergleichsweise hohe Momente/Kräfte in die Vorrichtung und somit in das Werkstück eingebracht werden. Die umgebende Geometrie, insbesondere hier im Wärmetauscher eines KKW, bedingt jedoch in aller Regel lange Wege gepaart mit zahlreichen Biegungen der Rohrleitungen sowie geringen Innendurchmessern und damit nur sehr begrenzte Räume. Dies führt häufig zu Unerreichbarkeiten und Materialermüdungen bis hin zum Bruch der Antriebwellen de mechanischen Schneid- oder Trenneinrichtung.

Für die Bearbeitung des Rohrleitungssystems und Durchführung der Reparaturmaßnahmen kommen noch weitere Verfahren in Frage, wie beispielsweise das MDM Verfahren zur Durchführung von Trennarbeiten, welches sich technologisch gesehen vom EDM unterscheidet und bei welchem Material mittels Stromerosion abgetragen wird.

Beim MDM Verfahren handelt es sich ebenfalls um eine Art EDM Verfahren nur wird hier nicht berührungslos gearbeitet. Die Elektrode wird im Rohr gedreht und liegt mal an mal nicht. Beim Anliegen wird durch ein örtliches Aufschmelzen Material entfernt. Bei einem gewissen Abstand wird auch ein Plasma aufgebaut aber nicht durch die EDM Steuerung abgeschaltet, sondern durch ein Weiterdrehen der Elektrode und somit einem Vergrößern des Abstandes Elektrode/Werkstück unterbrochen.

Dieses Verfahren ist daher nicht geeignet Aussagen über den Erodierzustand und/oder den Erodierfortschritt zu machen. Diese Art des Erodierens ist nicht steuerbar, da die Rückkopplung durch Kontrollgrößen fehlt, so dass dieses Verfahren durch seine Nicht-Steuerbarkeit eher nicht dazu geeignet ist, stufenweise Material gerichtet und definiert abzutragen.

Demgemäß treten dabei häufiger Probleme, die Steuerbarkeit des Verfahrens betreffend sowie hinsichtlich der Durchführungsdauer, die in aller Regel zu lang ist oder vergleichsweise großen Schwankungen unterliegt, auf. Auch ist verfahrensgemäß nur schwer sicherzustellen beziehungsweise gar nicht sicherzustellen, dass benachbarte Bauteile bei Durchführung nicht beschädigt werden.

Die oftmals beste und in vielen Fällen einzige und einfachste Zugangsmöglichkeit bietet beziehungsweise eröffnet sich dabei durch das Rohrleitungssystem selbst.

Demgemäß ist aus der DE 4421246 C1eine Vorrichtung zum Senkerodieren elektrisch leitender Werkstücke mittels EDM Verfahren bekannt geworden.

Bei der Elektroerosion (EDM -Electrical Discharging Machining) beziehungsweise dem Erodieren handelt es sich um ein Bearbeitungsverfahren, das zur Herstellung von Matrizen undgeometrisch geformten Objekten sowie allgemein zur Bearbeitung elektrisch leitender Werkstücke eingesetzt wird, wobei in der Bearbeitungszone jede zwischen einer Elektrode und einem Werkstück erzeugte elektrische Entladung werkstückseitig einen Krater (Materialabtrag) und elektrodenseitig einen Abbrand (Verschleiß der Werkzeugelektrode) bewirkt. Die jeweilige Elektrode, üblicherweise ein nachführbarer Draht, kann dabei zwischen unterschiedlichen Winkelpositionen geneigt werden, so dass auf diese Weise auch Werkstücke mit Koniken oder mit beispielsweise an einer Ober- und Unterseite des Werkstücks unterschiedlichen Profilen erzeugt und bearbeitet werden können. Die Bearbeitung des Werkstücks erfolgt dabei in aller Regel von außen nach innen.

Während der eigentlichen Bearbeitung des jeweiligen Werkstückes befindet sich die eingesetzte Elektrode zu keinem Zeitpunkt in mechanischem Kontakt mit dem zu bearbeitenden Werkstück und ist daher besonders schonend für das Werkstück.

Erschwerend kommt, wie vorstehend bereits ausgeführt, noch hinzu, dass in komplexen Systemen und technischen Anlagen wie beispielsweise in der Chemischen Industrie und diesbezüglichen Anlagen sowie bei kerntechnischen Anlagen viele Stellen oft nur über das Leitungssystem selbst zugänglich und erreichbar sind.

Bei der aus DE 4421246 C1 bekannt gewordenen Vorrichtung wird mindestens eine in Richtung der Erodierbewegung durch eine dazu senkrecht erfolgende Bewegung eines Antriebsmittel verschiebbare Senkelektrode eingesetzt.

Dadurch ist ein Senkerodieren auch in räumlich begrenzten Verhältnissen, wie zwischen zwei einander gegenüberliegenden Platten, ermöglicht, da die senkrecht zur Oberfläche erfolgende Erodierbewegung von außerhalb durch eine senkrecht dazu erfolgende Bewegung übertragbar ist. Dabei ist als Antriebsmittel eine axial verschiebbare Erodierstange vorgesehen, die an ihrem in Wirkverbindung mit der Senkelektrode stehenden Teil konisch geformt ist. Die Senkelektrode ist mittels wenigstens eines Führungsstiftes in einem hohlen Grundkörper gelagert, der das mit einer konischen Mantelfläche versehene Ende der Erodierstange aufnimmt, wobei der Führungsstift auf dieser konischen Mantelfläche gelagert ist. Weiterhin sind Mittel vorgesehen, so dass beim Zurückfahren der Erodierstange ein Rückstellen der Senkelektrode bewirkt wird. Statt lediglich einer Erodierelektrode sind auch zwei einander gegenüberliegende in einander entgegengesetzte Richtungen verschiebbare Senkelektroden vorsehbar, so dass in zwei parallel gegenüberliegende Oberflächenzugleich geometrische Formen oder Durchbrüche senkerodiert werden können.

Vorgenannte Vorrichtung weist dabei eine vergleichsweise komplexe und damit auch verhältnismäßig aufwendige, pflegeintensive und störanfällige Mechanik auf, die zudem eine räumlich ausgedehnte Struktur und Aufbau bedingt beziehungsweise besitzt, so dass ein Einsatz in Rohren, oder Leitungen mit vergleichsweise kleinem Durchmesser in aller Regel nicht möglich ist.

Dabei kann es zudem links und rechts des Bearbeitungsbereichs beziehungsweise vor und hinter der jeweiligen Elektrode je nach Gewichtsverteilung des zu bearbeitenden Werkstückes, insbesondere beim Kappen hohlzylindrischer Werkstücke, aufgrund des Temperaturübertrags zu Verformungen und ungewollten Beschädigungen des zu bearbeitenden Werkstückes kommen.

Darüber hinaus ist bei einem verbauten Werkstück, insbesondere einer Leitung oder einem Rohr, dieses nach erfolgter Inbetriebnahme oder Inbetriebsetzung von außen, das heißt von außerhalb des Werkstücks, oftmals nur sehr schwer oder gar nicht zugänglich, so dass hier allenfalls eine Bearbeitung von innen nach außen in Frage kommt oder durchführbar ist.

Des Weiteren besteht insbesondere bei Werkstücken mit einem geringen Innendurchmesser in aller Regel das Problem, dass eine exakte Bearbeitung des Werkstückes im Innenraum aufgrund des geringen Raum- und Platzangebotes stark erschwert bis gar nicht möglich ist und die Erodierelektrode nicht gerichtet in das Werkstück einbringbar und in dem Werkstück bewegbar ist.

Das Patentdokument JP H07 51947 A kann als nächstliegender Stand der Technik angesehen werden und offenbart eine Erodiervorrichtung zur Bearbeitung eines hohlzylindrischen Werkstücks, welche längserstreckt und/oder tubus- oder zylinderartig ausgebildet ist und dadurch gekennzeichnet ist, dass wenigstens zwei rotatorisch wirkende Antriebsmittel mit jeweils einer Antriebswelle sowie eine mit den Antriebsmitteln zusammenwirkende ring- oder scheibenartig ausgebildete Erodierelektrode vorgesehen ist, wobei Antriebsmittel und Elektrode in Größe und Ausdehnung auf den Innendurchmesser des zu bearbeitenden Werkstücks angepasst sind, so dass die Vorrichtung in das jeweilige hohlzylindrische Werkstück einführbar und an der jeweilig zu bearbeitenden Stelle oder dem zu bearbeitenden Bereich im Werkstück positionierbar ist, und die Erodierelektrode mittels einer gekoppelten Schwenk- oder Drehbewegung der wenigstens zwei Antriebsmittel in das Wandungsmaterial des Werkstückes einschwenkbar oder eindrehbar und auf einer vorbestimmbaren Bearbeitungsbahn, welche insbesondere der Innen- und/oder Außenkontur des Werkstücks folgt, durch das Werkstück und/oder dessen Wandungsmaterial hindurch- oder entlang bewegbar und ein Materialabtrag und/oder Schnitt im Wandmaterial des Werkstücks bewirkbar ist.

Der Erfindung liegt somit die Aufgabe zu Grunde eine verbesserte Möglichkeit für das Bearbeiten und Trennen von verbauten oder eingebauten Rohren und Rohrleitungen einer kerntechnischen Anlage oder Reaktoranlage und insbesondere eines Druckwasserreaktors anzugeben.

Vorgenannte Aufgabe wird durch eine Erodiervorrichtung zur Bearbeitung hohlzylindrischer, insbesondere rohrartiger Werkstücke, mit den Merkmalen des Anspruchs 1 gelöst, wobei besagte Vorrichtung in das Werkstückinnere einbringbar und dort positionierbar ist und dann von innen nach außen das Material des Werkstücks mittels EDM-Verfahren abarbeitet und/oder abträgt. Vorteilhafte Ausgestaltungen und Weiterbildungen der beanspruchten Erodiervorrichtung sowie ein entsprechendes Verfahren sind in weiteren Ansprüchen und der nachfolgenden Beschreibung angegeben. Die erfindungsgemäße Erodiervorrichtung zur Bearbeitung eines hohlzylindrischen Werkstücks ist längserstreckt und/oder tubus- oder zylinderartig ausgebildet und dadurch gekennzeichnet, dass wenigstens zwei rotatorisch wirkende Antriebsmittel mit jeweils einer Antriebswelle sowie eine mit den Antriebsmitteln zusammenwirkende ring- oder scheibenartig ausgebildete Erodierelektrode vorgesehen ist, wobei wenigstens ein erstes und ein zweites Antriebsmittel und/oder deren Symmetrie- oder Drehachsen radial beziehungsweise seitlich versetzt zueinander angeordnet sind und das zweite Antriebsmittel exzentrisch und kraftschlüssig mit der Antriebswelle des ersten Antriebsmittels verbunden und an dieser angeordnet und/oder mit dieser gekoppelt ist, und die Erodierelektrode exzentrisch und kraftschlüssig mit der Antriebswelle des zweiten Antriebsmittels verbunden und an dieser angeordnet und/oder mit dieser gekoppelt ist, wobei Antriebsmittel und Elektrode in Größe und Ausdehnung auf den Innendurchmesser des zu bearbeitenden Werkstücks angepasst sind, so dass die Vorrichtung in das jeweilige hohlzylindrische Werkstück einführbar und an der jeweilig zu bearbeitenden Stelle beziehungsweise dem zu bearbeitenden Bereich im Werkstück positionierbar ist, und die Erodierelektrode mittels einer gekoppelten Schwenk- oder Drehbewegung der wenigstens zwei Antriebsmittel in das Wand- oder Wandungsmaterial des Werkstückes einschwenkbar oder eindrehbar und auf einer der Innen- und/oder Außenkontur des Werkstücks folgenden Bearbeitungsbahn durch das Werkstück und/oder das Wandungsmaterial hindurch- oder entlangbewegbar ist und wobei entlang der Bearbeitungs- oder Bewegungsbahn mittels EDM-Verfahren ein Materialabtrag und/oder Schnitt im Wandmaterial des Werkstücks bewirkbar und/oder erzeugbar ist.

In einer weiteren Ausgestaltung ist vorgesehen, dass die Drehachse der ersten Antriebswelle mit der Symmetrieachse des ersten Antriebsmittels korrespondiert und die Drehachse der zweiten Antriebswelle mit der Symmetrieachse des zweiten Antriebsmittels korrespondiert, wobei das zweite Antriebsmittel derart angeordnet ist, das sich dessen Dreh- und Symmetrieachse außerhalb der Mittelachse des hohlzylindrischen Werkstücks und insbesondere des zu bearbeitenden Rohres befindet beziehungsweise seitlich oder radial versetzt zu dieser angeordnet und/oder ausgerichtet ist.

Vorteilhaft wirken dabei Antriebsmittel und Elektrode derart zusammen, dass die Elektrode in das zu bearbeitende Werkstück einschwenkbar und auf einer vorbestimmbaren Bearbeitungsbahn, insbesondere auf oder in einer vornehmlich Kreisbahn, durch das Werkstück und insbesondere dessen Hüllen- oder Wandmaterial bewegbar, insbesondere drehbewegbar, ist.

Weiterbildend ist vorsehbar, dass die Durchmesser der wenigstens zwei Antriebsmittel oder Antriebseinrichtungen sowie der Erodierelektrode auf die lichte Weite beziehungsweise den Innendurchmesser des zu Bearbeitenden hohlzylindrischen Werkstückes, insbesondere den Innendurchmesser einer Leitung oder eines Rohres einer kerntechnischen Reaktoranlage, angepasst sind.

Von besonderem Vorteil ist dabei der Durchmesser beziehungsweise der Außendurchmesser des zweiten Antriebsmittels beziehungsweis der zweiten Antriebseinrichtung kleiner als der Durchmesser des ersten Antriebsmittels beziehungsweise der ersten Antriebseinrichtung gewählt, so dass bei gegebenem radialen Versatz das zweite Antriebsmittel durch das erste Antriebsmittel verdeckbar ist und/oder das zweite Antriebsmittel aufgrund oder trotz seiner exzentrischen Kopplung an das erste Antriebsmittel im hohlzylindrischen Werkstück um 360° schwenk- und/oder drehbar ist.

Weiterbildend ist der Durchmesser der Erodierelektrode kleiner oder gleich groß wie der Durchmesser des ersten Antriebsmittels ausgebildet.

Das jeweilige Antriebsmittel ist dabei als elektromechanischer Antrieb, insbesondere als Schrittantrieb oder -motor oder Servoantrieb und/oder Drehantrieb, oder als hydraulischer Antrieb oder als pneumatischer Antrieb ausbildbar, wobei zusätzlich Getriebeuntersetzungen vorsehbar sind, um eine geeignete Bewegung- und insbesondere Bewegungssteuerung zu erreichen und bewirken. Auch eine Kombination verschiedener Antriebsarten ist durchaus realisier- und vorsehbar.

Aufgrund der besonderen Anordnung und Ausrichtung von Antriebsmitteln und Elektrode sind gegenüber bekannten Anordnungen aufgrund der vergleichsweise geringen Längen der Antriebswellen bei vergleichsweise geringer und kompakter Bauweise hohe Steifigkeiten der gesamten Anordnung erreichbar und damit eine besonders schonende und exakte Bearbeitung des jeweiligen Werkstücks ermöglicht und bewirkbar.

Vorteilhaft ermöglicht es die erfindungsgemäße Erodiervorrichtung dabei ein hohlzylindrisches Werkstück, insbesondere eine Leitung und/oder ein Rohr, insbesondere mit einem kreisförmigen oder elliptischen Querschnitt, von innen heraus abzutrennen oder einzuschneiden und damit auch schwer zugängliche Bereiche des jeweiligen hohlzylindrischen Werkstücks, und insbesondere eines Rohres oder einer Leitung einer Reaktoranlage oder kerntechnischen Anlage, zu bearbeiten.

Die Erodiervorrichtung und insbesondere die Abmessungen der Antriebsmittel beziehungsweise Antriebseinrichtungen sowie der Elektrode sind dabei derart aufeinander und das jeweilige hohlzylindrische Werkstück und insbesondere dessen Innendurchmesser oder lichte Weite angepasst, dass die Erodiervorrichtung leichtgängig in das hohlzylindrische Werkstück, insbesondere ein Rohr oder eine Leitung, einsetzbar und/oder darin bewegbar, insbesondere verschiebbar und/oder an der zu bearbeitenden Stelle positionierbar ist.

Die Positionierung der Erodiervorrichtung kann beispielsweise mittels eines hydraulischen in Längsrichtung wirkenden Vortriebs, beispielsweise mittels Hydraulikdüsen durch welche ein Flüssigkeitsstrahl mit vergleichsweise hohem Druck getrieben wird und dessen Rückstoß die Vorrichtung dann vorantreibt, bewirkt werden.

Vorteilhaft ist auch vorsehbar, dass die Erodiervorrichtung mittels eines durch das Werkstück geleiteten Flüssigkeits- oder Gasstrahles an den jeweiligen Einsatzort verbracht oder geschossen und/oder dort positioniert wird.

Weiterbildend ist vorsehbar, dass die Erodiervorrichtung mittels eines an ihr befestigten Drahtseiles führbar und aus dem Werkstück rückholbar ist.

Für kleinere Vortriebsstrecken und damit eine Bewegung der Elektrode in Längsrichtung oder in axialer Richtung ist ein weiteres Antriebsmittel, beispielsweise ein Servo- oder Schrittantrieb mit Spindel vorsehbar, welcher zwischen das zweite Antriebsmittel beziehungsweise dessen Welle und die Erodierelektrode zwischengeschaltet ist und mit welchem eine Längsbewegung lediglich der Elektrode bewirkbar ist, ohne dass die gesamte Erodiervorrichtung ihre Position verändern muss.

Als ein weiteres Problem ist die Verformung des zu bearbeitenden Werkstücks durch den Erodierprozess und die Aufheizung des jeweiligen Werkstücks bei gleichzeitig ungleicher Lastverteilung erkannt worden. Um den Erodierprozess bis zum Ende stabil zu halten und vorgenannte Nachteile und Effekte zu vermeiden, ist die Erodiervorrichtung im zu bearbeitenden Werkstück zu verspannen, wobei diese Verspannung zu beiden Seiten der Bearbeitungs- beziehungsweise Erodierstelle oder des Erodierspaltes und insbesondere der Erodierelektrode zu erfolgen hat. Dies bedeutet, dass beispielsweise bei Abtrennung oder Trennung eines Rohres oder einer Leitung erfolgt die Verspannung der Erodiervorrichtung im Inneren des Rohres nicht nur in dem abzutrennenden Teil, sondern auch in einemTeil des Stutzens oder Rohres, der noch bestehen bleibt. Erfolgt die Verspannung der Erodiervorrichtung nur auf einer Seite der Elektrode oder der Erodierstelle, so kann es sonst insbesondere gegen Ende des Trennvorganges aufgrund des bereits erfolgten Materialabtrags zu einem Einklemmen der Elektrode und gegebenenfalls zu einer Verformung des Werkstücks kommen, wodurch der Prozess unnötig in die Länge gezogen und eine exakte Bearbeitung nahezu unmöglich gemacht wird. Es ist vorgesehen, dass die Erodiervorrichtung wenigstens zwei Verspannvorrichtungen aufweist, welche in Längsrichtung zu beiden Seiten der Erodierelektrode und damit des eigentlichen Bearbeitungsbereiches oder bereits erzeugten Erodierspaltes angeordnet sind und die Erodiervorrichtung sowie insbesondere die Antriebe beziehungsweise Antriebsmittel und die Elektrode in Längsrichtung beziehungsweise axialer Richtung verrückungsfest im Werkstück halten und mit diesem verspannen, so dass ein Verformen des Werkstückes durch den Bearbeitungsprozess und damit ein Einklemmen der Elektrode beim Erodiervorgang und insbesondere in der Endphase des Erodierprozesses vermieden und somit ein genaues und störungsfreies Arbeiten, insbesondere Trennen, bewirkbar und/oder gewährleistet ist. Die jeweilige Verspannvorrichtung weist drei oder mehr spannbacken auf, welche beispielsweise bei Bedarf elektromechanisch radial nach Außen gedrückt werden bis die Vorrichtung sicher im Werkstück verspannt und gehalten ist.

Diesbezüglich sind weiterbildend Versorgungsleitungen vorsehbar mit beziehungsweise über welche die Erodiervorrichtung sowohl mit elektrischer Energie als auch Gas oder Flüssigkeiten, beispielsweise für die Verspannvorrichtungen, und/oder mit einem Dielektrikum zum Spülen des Erodierspaltes oder der Erodierstelle und/oder Durchführung des eigentlichen EDM- Verfahren versorgt wird.

Eine erste Verspannvorrichtung ist dabei mit dem ersten Antriebsmittel starr verbunden und eine weitere zweite Verspannvorrichtung ist, insbesondere über ein Drehlager und eine Achse oder eine Welle oder einen Steg, drehbeweglich mit der Welle des ersten Antriebsmittels und/oder dem zweiten Antriebsmittel verbunden.

In Längsrichtung oder axialer Richtung der Erodiervorrichtung sind die beiden Verspannvorrichtungen sowie Antriebsmittel und Erodierelektrode somit kraftschlüssig miteinander verbunden und/oder gekoppelt.

In Vorteilhafter Ausgestaltung umfasst die Erodiervorrichtung auch eine Steuerungseinrichtung mit welcher der EDM Prozesses präzise und effektiv steuerbar und kontrollierbar ist, wobei der EDM Prozess und damit beispielsweise auch das Bearbeiten und /oder Trennen eines hohlzylindrischen Werkstückes und insbesondere eines Rohres oder einer Leitung, von innen nach außen bewirkt und/oder durchgeführt wird.

Weiterbildend ist vorsehbar das wenigstens eine Mess- oder Sensoranordnung vorgesehen ist, mit welcher der Fortschritt und/oder Verlauf und/oder die Steuerung des jeweiligen Bearbeitungs- oder Trennprozesses und insbesondere der erfolgreiche Durchschnitt ermittel- und /oder erfassbar ist, wobei die Erfassung und/oder Bestimmung anhand von EDM-Parametern, wie beispielsweise Strom, Spannung, Abtragsrate, und Anteil der Wirkimpulse, oder rein Visuell, mittels optischer Überwachungseinrichtungen, wie beispielsweise einer Kamera, und/oder durch die Änderung der Eigenfrequenz des Werkstückes, insbesondere des Rohres oder der Leitung, und/oder durch das Wirbelstromverfahren durchführbar ist beziehungsweise durchgeführt wird.

Beim sogenannten Wirbelstromverfahren wird mittels einer Spule ein veränderliches Magnetfeld erzeugt, welches im zu untersuchenden Material Wirbelströme induziert, welche ihrerseits ein veränderliches Magnetfeld erzeugen, das dem Erregerfeld entgegen gerichtet ist. Mittels einer Sensoranordnung mit Sensor wird bei der jeweiligen Messung die resultierende Gesamtfeld beziehungsweise die Gesamtfeldveränderung detektiert. Diesbezüglich werden mittels einer weiteren Messspule in der Sensoranordnung Parameter wie die Amplitude und die Phasenverschiebung zum Erregersignal erfasst..Alternativ dazu sind auch andere gebräuchliche Magnetfeldsensoren, wie beispielsweise GMR-Sensoren (Sensoren zur Bestimmung des Riesenmagnetowiderstandes) oder SQUIDs(supraleitende Quanteninterferenzeinheit) einsetzbar.

Bei der Wirbelstromprüfung wird der Effekt ausgenutzt, dass Dickenvariationen in einem elektrisch leitfähigen Material auch eine Variation der elektrischen Leitfähigkeit oder eine geänderte Permeabilität gegenüber der eigentlichen Materialdicke aufweisen.

Da das Messsignal von den drei Parametern Leitfähigkeit, Permeabilität sowie dem Abstand zwischen Detektor und Materialoberfläche bestimmt wird, lassen sich mittels Wirbelstromprüfung auch Unterschiede in der Materialstärke beziehungsweise - dicke und damit auch der Materialabtrag beziehungsweise der Grad und Fortschritt des Materialabtrags mittels EDM-Verfahren erfassen und bestimmen.

Zur Steuerung und Kontrolle sowohl des Erodier- und/oder Trennprozesses sowie insbesondere der jeweilig eingesetzten Antriebsmittel ist vorteilhaft eine Steuerungsvorrichtung vorsehbar, welche mit verschiedenen Messeinrichtungen und Sensoranordnungen zusammenwirkt und/oder eine Remote- beziehungsweise Fernsteuerung der Erodiervorrichtung sowie des eigentlichen Erodierprozesses über dafür vorgesehene Schnittstellen und Bedienelemente ermöglicht und erlaubt.

Der Antriebbeider Antriebswellen der Antriebseinrichtungenbeziehungsweise Antriebsmittel muss gesteuert erfolgen, um den Bearbeitungsprozess kontrolliert und exakt durchführen zu können, was z.B. durch Schrittmotoren und entsprechenden Getriebeuntersetzungen bewirkbar ist.

Weiterhin ist vorsehbar, dass wenigstens eine Mess- und/oder Sensorvorrichtung vorgesehen ist, wobei die Bestimmung und Auswertung der Winkellagen und Bewegungssteuerung der Antriebseinheiten der Antriebswellen sowie der Elektrode mittels bekannter Messvorrichtungen und Messmittel wie Drehgeber oder Winkellagegeber, wie beispielsweise Encoder, Resolver, Inkrementalgeber, Potentiometergeber, Absolutwertgeber,Tacho und dergleichen oder einer Kombination daraus durchführbar ist.

Weiterhin wird die gestellte Aufgabe dabei durch ein Erodierverfahren, insbesondere ein Senkerodierverfahren,zur Bearbeitung hohlzylindrischer Werkstücke und insbesondere von Rohren oder Leitungen einer kerntechnischen Anlage oder einer Reaktoranlage gelöst, wobei wenigstens eine Erodiervorrichtung der vorbeschriebenen Art an den zu bearbeitenden Bereich, insbesondere den zu trennenden Bereich und/oder die vorbestimmte Trennstelle, durch das jeweilige hohlzylindrische Werkstück, insbesondere das Rohr oder die Leitung, gebracht oder bewegt und dort positioniert wird, derart, dass der Bearbeitungs- und/oder Trennprozess mittels EDM-Verfahren sicher durchführbar ist und eine prozess- beziehungsweise bearbeitungsbedingte Verformung und/oder Beschädigung des jeweiligen Rohr- oder Leitungsbereichs vermieden oder zumindest minimiert wird, indem die Erodiervorrichtung mittels zweier Verspannvorrichtungen an wenigstens zwei Stellen, nämlich jeweils vor und hinter der jeweiligen Bearbeitungsstelle und/oder dem jeweiligen Erodierspalt im hohlzylindrischen Werkstück verrückungsfest, insbesondere in axialer Richtung oder in Längsrichtung verrückungsfest, verspannt und die Erodierelektrode mittels wenigstens zweier, insbesondere gekoppelter Schwenkbewegungen in die Wandung des Werkstückes eingeschwenkt und auf einer vorbestimmbaren Bearbeitungsbahn, welche insbesondere der Innen- oder Außenkontur des Werkstücks angepasst ist und/oder folgt, durch das Wand- oder Wandungsmaterial hindurch- oder an dem Wandungsmaterial entlang bewegt wird.

Demgemäß ist vorteilhaft vorsehbar dass die Erodiervorrichtung an wenigstens zwei Stellen, nämlich jeweils vor und hinter der Bearbeitungsstelle oder dem entstehenden Erodierspalt im hohlzylindrischen Werkstück verspannt und die Erodierelektrode mittels wenigstens zweier Schwenkbewegungen in die Wandung des Werkstückes eingeschwenkt und auf einer vorbestimmbaren, insbesondere einer der Innen- oder Außenkontur folgenden Bearbeitungsbahn durch das Wand- oder Wandungsmaterial des Werkstücks hindurch- oder an dem Wandungsmaterial entlang bewegt wird.

Verfahrensgemäß kann somit, nachdem die Erodiervorrichtung an der zu bearbeitenden Stelle des jeweiligen hohlzylindrischen Werkstücks positioniert wurde, mittels der vorgenannten Vorrichtung ein vorbestimmbarer Bereich aus dem jeweiligen hohlzylindrischen Werkstück, hier einem Rohr oder einer Leitung einer kerntechnischen Anlage, herausgetrennt oder geschnitten werden. Vor dem eigentlichen Bearbeitungs- oder Trennvorgang wird zur Vermeidung oder zumindest Minimierung prozess- beziehungsweise bearbeitungsbedingter Verformungen und/oder Beschädigungen des jeweiligen Rohr- oder Leitungsbereichs an wenigstens zwei Stellen im Werkstück, insbesondere im Rohr oder in der Leitung, und insbesondere zu beiden Seiten des Bearbeitungsbereichs und/oder der Trenn- oder Schnittlinie, verspannt.

Weiterbildend ist vorgesehen, dass die Erodierelektrode mittels zweier gekoppelter Drehbewegungen in einer vorbestimmbaren Tiefe in das Wandmaterial eines hohlzylindrischen Werkstücks eintauchbar beziehungsweise einschwenkbar und auf einer im Wesentlichen der Außenkontur und/oder der Innenkontur angepassten Bewegungsbahn ein- oder auch mehrmals durch das Werkstück bewegt oder geschwenkt wird.

Vorteilhaft ist dabei weiterhin vorsehbar, dass die beiden gekoppelten Drehbewegungen unabhängig voneinander, das heißt mit zwei unabhängig ansteuerbaren Antriebsmitteln ausführbar sind wodurch ganz unterschiedliche Bearbeitungsschritte und Schnitte bewirkbar sind und sich die folgende Schnittmöglichkeiten ergeben, wobei
a) ein kompletter Einstich durch die Werkstückwandung oder Rohrwandung und dann der anschließende axiale Umfangsschnitt durchführbar ist, oder
b) ein axialer Schnitt mit einer Zustellung in radialer Richtung durchführbar ist, wobei die radiale Zustellung kontinuierlich bewirkbar oder durchführbar ist, so dass die Schnittlinie letztlich einer Spirale gleicht, oder
c) ein axialer Schnitt mit einer Zustellung in radialer Richtung durchführbar ist, wobei die radiale Zustellung nach bestimmten Winkeln bewirkt wird, wobei immer ein kompletter Umfangsschnitt, wie insbesondere ein Winkelschritt von 360°, mit gleichem oder identischem Außendurchmesser durchgeführt und erst nach dem jeweiligen Umfangsschnitt die Einstichtiefe weiter vergrößert oder erhöht wird, so dass der Abtrag im Grunde nach Schichten beziehungsweise in mehreren Schichten erfolgt, oder
d) ein kompletter Einstich durch die Werkstückwandung oder Rohrwandung durchführbar ist und der Schnitt damit zuerst komplett in radialer Richtung bewirkbar ist, wobei dann ein Herausfahren, ein Verdrehen in axialer Richtung und dann wieder ein Einstich wie zuvor erfolgt oder durchführbar oder bewirkbar ist, oder
e) eine Kombination mehrerer der unter a) bis d) angegebenen Schnittmöglichkeiten durchführbar und bewirkbar ist, wie insbesondere ein vollständiger Einstich und ein sich daran anschließender Spiralschnitt.

Weiterhin ist vorsehbar, dass die Erkennung und Detektion des kompletten Durchschnittes auf wenigstens eine oder eine Kombination der nachfolgend angegebenen Arten durchgeführt wird, wobei
a) bei bekanntem Abbrand die Einstichtiefe als Funktion von Drehwinkel und Elektrodengröße beziehungsweise bei Ring- oder Scheibenelektrode Elektrodenradius oder -durchmesser durch den jeweiligen Drehwinkel bestimmbar ist, welcher durch ein geeignete Messmittel, insbesondere Drehgeber oder Winkellagegeber, an den jeweiligen Antriebsmitteln erfass- und bestimmbar, insbesondere messbar, ist,
b) die Eintauchtiefe und/oder der Durchschnitt auch mittels Messverfahren wie Ultraschallmessung oder Wirbelstrommessung ermittelbar ist,
c) die Eintauchtiefe und/oder der Durchschnitt durch die Frequenzänderung des Werkstückes, insbesondere bei erfolgtem Durchschnitt, erfassbar ist,
d) die Eintauchtiefe und/oder der Durchschnitt durch eine bildgebendes Verfahren, insbesondere mittelseines Endoskopes oder einer an der Erodiervorrichtung angeordneten Kamera, erfassbar ist,
e) die Eintauchtiefe und/oder der Durchschnitt durch Analyse der Erodierparameter ermittelbar und detektierbar ist, da sich insbesondere der Stromfluss bei erfolgreichem Durchschnitt signifikant verändert.

Die weitere Darlegung der Erfindung sowie vorteilhafter Ausgestaltungen und Weiterbildungen erfolgt anhand einiger Figuren sowie eines Ausführungsbeispiels.

Es zeigen
Fig. 1 eine beispielhaft ausgebildete erfindungsgemäße Erodiervorrichtung im Längsschnitt und in im Werkstück verspanntem Zustand,
Fig. 2 die beispielhaft ausgestaltete Erodiervorrichtung gemäß Fig. 1 in Draufsicht auf die Erodierelektrode und mit Elektrode im Einstich.

Zur näheren Erläuterung der Erfindung wird anhand der beiliegenden Abbildungen ein Ausführungsbeispielnäher beschrieben und erläutert, wobei gleiche Teile in allen Figurenmit denselben Bezugszeichen versehen sind.

In kerntechnischen Anlagen werden, wie bereits einleitend angedeutet, aufgrund auftretender Probleme in den insbesondere Dampferzeugern (primäre Wärmetauscher) welche als Trennglied des primären zum sekundären Kreislauf eingesetzt sind auch häufiger Reparaturen erforderlich und durchgeführt.

Um die Problem-Entstehungsmechanismen beziehungsweise Ursachen der aufgetretenen beziehungsweise auftretenden Probleme klären zu können, müssen in aller Regel Proben von den Beschädigungen an diesen Rohren genommen werden, wobei aufgrund der hohen Strahlenbelastung und damit einem vergleichsweise hohen Gefährdungspotential für das Betriebspersonal der kerntechnischen Anlage die jeweiligen Leitungs- diese Rohrstücke mechanisiert und/oder automatisiert zu entnehmen sind.

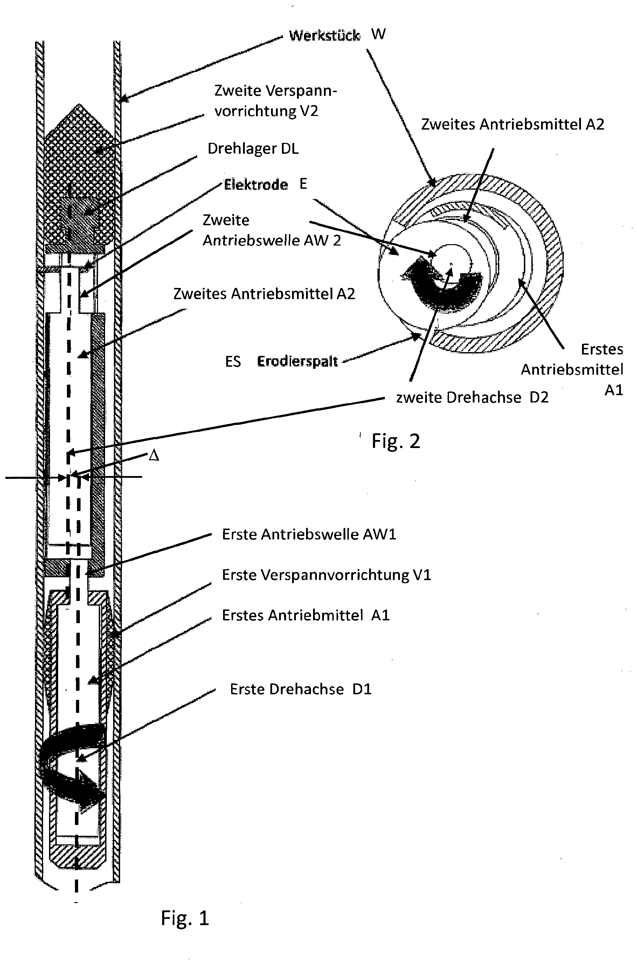

Dafür ist die in den Figuren 1 und 2 gezeigte beispielhaft ausgebildete erfindungsgemäße Erodiervorrichtung vorgesehen und einsetzbar.

In Fig. 1 ist eine beispielhaft ausgebildete erfindungsgemäße Erodiervorrichtung zum Bearbeiten und insbesondere Trennen eines hohlzylindrischen Werkstücks in Schnittdarstellung als Längsschnitt gezeigt, wobei die gezeigte Erodiervorrichtung in einem eingebauten beziehungsweise verbauten Rohr oder einer Leitung einer, insbesondere im Betrieb befindlichen, Reaktoranlage verspannt ist.

Die Erodiervorrichtung ist dabei längserstreckt und/oder tubus- oder zylinderartig ausgebildet und weist zwei rotatorisch wirkende Antriebsmittel A1 ,A2, im hier gezeigten Beispiel zwei elektrische Drehantriebe in der Art von Servomotoren, mit jeweils einer Antriebswelle AW1,AW2, sowie eine mit den Antriebsmitteln zusammenwirkende ring- oder scheibenartig ausgebildete Erodierelektrode E auf. Dabei ist besonders hervorzuheben, dass das erste Antriebsmittel A1 und das zweite AntriebsmittelA2 und/oder deren Symmetrie- oder Drehachsen D1 und D2 um einen vorbestimmbaren Abstand Δ radial beziehungsweise seitlich versetzt zueinander ausgerichtet und angeordnet sind, wobei das zweite Antriebsmittel A2 exzentrisch und kraftschlüssig mit der Antriebswelle AW1 des ersten Antriebsmittels A1 verbunden und an dieser angeordnet ist. Somit ist das zweite Antriebsmittel A2 mittels des ersten Antriebsmittels A1 elektromotorisch und/oder elektromechanisch und automatisiert um wenigstens 360° drehbar ausgebildet. Vorteilhaft können dabei auch mehrere 360° Drehungen beziehungsweise vollkreisartige Drehungen oder auch nur teilkreisartige Drehbewegungen ausgeführt werden, wobei bei Einsatz eines entsprechenden Schritt oder Servoantriebs, sowohl kontinuierliche Drehbewegungen als auch schrittweise Drehbewegungen durch- oder ausführbar sind.

Des Weiteren ist die zur Ausführung des eigentlichen EDM-Prozesses vorgesehene Erodierelektrode E kraftschlüssig mit der Antriebswelle AW 2 des zweiten Antriebsmittels A2 verbunden und exzentrisch an dieser angeordnet. Demgemäß ist die Erodierelektrode E mittels des zweiten Antriebsmittels A2 elektromotorisch beziehungsweise -mechanisch und automatisiert um wenigstens 0 bis 180°drehbar ausgebildet. Vorteilhaft können dabei auch bei Einsatz eines entsprechenden Schritt- oder Servoantriebs, sowohl kontinuierliche Drehbewegungen als auch schrittweise Drehbewegungen durch- oder ausgeführt werden.

Weiterhin sind die Antriebsmittel A1,A2 und Elektrode E in Größe und Ausdehnung auf den Innendurchmesser des zu bearbeitenden Werkstücks W angepasst, so dass die Erodiervorrichtung leichtgängig und ohne größeren Widerstand in das jeweilige hohlzylindrische Werkstück W einführbar und an der jeweilig zu bearbeitenden Stelle beziehungsweise dem zu bearbeitenden Bereich im Werkstück W positionierbar ist. Im hier gezeigten Beispiel ist daher der Durchmesser beziehungsweise die laterale Weite oder Ausdehnung des zweiten Antriebsmittels A2 kleiner als die des ersten Antriebsmittels A1 und die der Erodierelektrode E kleiner oder gleich der des ersten Antriebsmittels A1 gewählt. Dies ist insbesondere anhand von Fig. 2 sehr deutlich zu erkennen.

Somit kann die Erodierelektrode E mittels einer gekoppelten Schwenk- oder Drehbewegung der zwei Antriebsmittel A1 und A2 in das Wandungsmaterial des Werkstückes eingeschwenkt oder eingedreht werden, wobei mittels EDM Prozesses, wie in Fig. 2 ersichtlich, zunächst ein Erodierspalt ES gebildet wird. Weiterhin kann die Elektrode E auf einer vorbestimmbaren Bahn und insbesondere auf einer der Innen- und/oder Außenkontur des Werkstücks W folgenden Bearbeitungsbahn durch das Werkstück W und/oder das Wandungs- beziehungsweise Wandmaterial des Werkstücks hindurch- oder entlangbewegt werden. Der Materialabtrag und Spaltbildungsprozess kann dabei in mehreren Schritten oder Durchläufen, quasi Schicht für Schicht bewirkt werden, insbesondere so lange bis ein Durchstoß durch die Wand des Werkstückes bewirkt ist.

Auch ist vorgesehen, dass die Drehachse der ersten Antriebswelle AW 1 mit der Symmetrieachse des ersten Antriebsmittels A1 korrespondiert und die Drehachse der zweiten Antriebswelle AW2mit der Symmetrieachse des zweiten Antriebsmittels A2korrespondiert.

Vorteilhaft wirken dabei Antriebsmittel A1 ,A2 und Elektrode E derart zusammen, dass die Elektrode E in das zu bearbeitende Werkstück W einschwenkbar und, insbesondere auf oder in einer im hier gezeigten Beispiel vornehmlich Kreisbahn, durch das hohlzylindrische Werkstück W und insbesondere dessen Hüllen- oder Wandmaterial bewegbar, insbesondere drehbewegbar, ist.

Auch wenn die im hier gezeigten Beispiel angegebenen Antriebsmittel A1,A2 als Elektroantrieb und/oder elektrischer Drehantrieb beziehungsweise elektromechanischer Servo- oder Schrittantriebmit geeigneter Getriebeuntersetzung ausgebildet sind, können diese oder auch nur wenigstens ein Antriebsmittel grundsätzlich auch als hydraulischer Antrieb oder als pneumatischer Antrieb ausgebildet sein.

Aufgrund der besonderen Anordnung und Ausrichtung von Antriebsmittel A1,A2 und Elektrode sind gegenüber bekannten Anordnungen aufgrund der vergleichsweise geringen Längen der Antriebswellen AW1,AW2 bei vergleichsweise geringer und kompakter Bauweise hohe Steifigkeiten der gesamten Anordnung erreichbar und damit eine besonders schonende und exakte Bearbeitung des jeweiligen Werkstücks W ermöglicht und bewirkbar.

Vorteilhaft ermöglicht es die erfindungsgemäße Erodiervorrichtung dabei ein hohlzylindrisches Werkstück W, insbesondere eine Leitung und/oder ein Rohr, insbesondere mit einem kreisförmigen Querschnitt, von innen heraus abzutrennen oder einzuschneiden und damit auch von außen schwer zugängliche Bereiche des Werkstücks W zu bearbeiten, wobei die eigentliche Bearbeitung in mehreren Schritten und /oder Durchgängen durchführbar ist. Wie in Fig. 2 gezeigt ist hier beispielhaft bereits ein Teilkreisbereich des zu bearbeitenden Werkstücks freigelegt beziehungsweise durchtrennt und ein Erodierspalt ES gebildet, in welchen die Elektrode E eingetaucht ist.

Die Erodiervorrichtung und insbesondere die Abmessungen der Antriebsmittel A1,A2 beziehungsweise Antriebseinrichtungen sowie der Elektrode E sind dabei derart aufeinander und die lichte Weite beziehungsweise den Innendurchmesser des zu bearbeitenden hohlzylindrischen Werkstücks W angepasst, so dass die Erodiervorrichtung leichtgängig in das hohlzylindrische Werkstück, insbesondere ein Rohr oder eine Leitung einer kerntechnischen Anlage oder einer chemischen Produktionsanlage, einsetzbar und/oder darin bewegbar, insbesondere verschiebbar und positionierbar ist.

Zur Vermeidung von Verformung des zu bearbeitenden Werkstücks W aufgrund des Erodier- oder Trennprozesses sind, um den jeweiligen Erodierprozess bis zum Ende stabil zu halten Verspannvorrichtungen V1,V2 vorgesehen, mit welchen die die Erodiervorrichtung im zu bearbeitenden Werkstück W verspannbar ist und/oder ortsgenau sowie verrückungsfest positionierbar ist. Diese Verspannung erfolgt dabei zu beiden Seiten der Bearbeitungs- beziehungsweise Erodierstelle oder -bereichs beziehungsweise des jeweiligen Erodierspaltes ES und insbesondere der Erodierelektrode E, so dass beispielsweise bei Abtrennung oder Trennung eines Rohres oder einer Leitung die Verspannung der Erodiervorrichtung im Inneren des Rohres nicht nur in dem abzutrennenden Teil, sondern auch in einemTeil des Stutzens oder Rohres, der noch bestehen bleibt, bewirkt ist oder wird.

Erfolgt die Verspannung der Erodiervorrichtung demgegenüber jedoch nur auf einer Seite der Elektrode E oder der Erodierstelle, so kann es insbesondere gegen Ende des Trennvorganges aufgrund des bereits erfolgten Materialabtrags zu einem Einklemmen der Elektrode und gegebenenfalls zu einer Verformung des Werkstücks kommen, wodurch der Prozess unnötig in die Länge gezogen und eine exakte Bearbeitung nahezu unmöglich gemacht würde.

Die Erodiervorrichtung weist im hier gezeigten Beispiel der Figur 1 zwei VerspannvorrichtungenV1,V2 auf, welche in Längsrichtung zu beiden Seiten der Erodierelektrode E angeordnet sind und die Vorrichtung sowie insbesondere die Antriebe beziehungsweise Antriebsmittel A1 ,A2 und die Elektrode E axial verrückungsfest im Werkstück halten und mit diesem verspannen, so dass ein Verformen des Werkstückes W durch den Bearbeitungsprozess und damit ein Einklemmen der Elektrode E beim Erodiervorgang und insbesondere in der Endphase des Erodierprozesses vermieden und somit ein genaues und störungsfreies Arbeiten, insbesondere Trennen, bewirkbar und/oder gewährleistet ist.

Die jeweilige Verspannvorrichtung V1, V2 ist elektromechanisch ausgebildet, wobei drei oder mehr Spannbacken vorgesehen sind, welche sich beim Verspannvorgang im Werkstück derart ausdehnen und an die Wandung des Werkstücks pressen, bis eine Klemmung der Vorrichtung im hohlzylindrischen WerkstückW und insbesondere im Rohr oder der Leitung einer kerntechnischen Anlage oder Reaktoranlage bewirkt ist.

Wie der Fig. 1 entnehmbar ist dabei eine erste Verspannvorrichtung V1 mit dem ersten Antriebsmittel A1 starr verbunden und eine weitere zweite Verspannvorrichtung V2, insbesondere über ein Drehlager DL und eine Welle oder Achse drehbeweglich mit der Welle AW1 des ersten Antriebsmittels A1 und/oder drehbeweglich mit dem ersten Antriebsmittel und/oder dem zweiten Antriebsmittel verbunden.

In Längsrichtung oder axialer Richtung der Erodiervorrichtung sind die beiden Verspannvorrichtungen V1 ,V2 sowie Antriebsmittel A1, A2 und Erodierelektrode somit kraftschlüssig miteinander verbunden oder gekoppelt.

Die in Fig. 2 gezeigte Erodiervorrichtung umfasst demnach ebenfalls wenigstens zwei längserstreckt ausgebildete Antriebsmittel A1,A2, wobei wenigstens ein erstes Antriebsmittel A1 über eine erste Antriebswelle AW1 dreh- und/oder schwenkbar mit wenigstens einem zweiten Antriebsmittel A2 in Wirkverbindung steht, und eine ring- oder scheibenartige Erodierelektrode E vorgesehen ist, welche über eine zweite Antriebswelle AW2 mit dem wenigstens einen zweiten Antriebsmittel A2 dreh- und/oder schwenkbar in Wirkverbindung steht, wobei das erste und zweite Antriebsmittel A1, A2 radial versetzt zueinander angeordnet sind und die Erodierelektrode E exzentrisch mit der zweiten Antriebswelle AW2 verbunden und/oder an dieser angeordnet ist, und wobei Antriebsmittel A1, A2 und Elektrode E derart zusammenwirken, dass die Elektrode E in das zu bearbeitende Werkstück W einschwenkbar und auf einer nahezu Kreisbahn, durch das Werkstück und insbesondere dessen Hüllen- oder Wandmaterial bewegbar, insbesondere drehbewegbar, ist.

Mittels der vorgenannten Vorrichtung wird der entsprechende Bereich aus dem jeweiligen hohlzylindrischen Werkstück W, hier einem Rohr oder einer Leitung einer kerntechnischen Anlage, herausgetrennt oder geschnitten. Dafür wird die Erodiervorrichtung an den entsprechenden zu bearbeitenden Bereich durch das Rohr gebracht beziehungsweise bewegt. Um den Bearbeitungs- und/oder Trennprozess dann sicher durchführen zu können und eine prozess- beziehungsweise bearbeitungsbedingte Verformung und/oder Beschädigung des jeweiligen Rohr- oder Leitungsbereichs zu vermeiden oder zumindest zu minimieren wird die Erodiervorrichtung mittels zweier VerspannvorrichtungenV1,V2 an wenigstens zweiStellen im Rohr oder in der Leitung verspannt.

Zur Durchführung des EDM Prozesses wird ein Dielektrikum, in diesem Fall vollkommen oder nahezu vollkommen entmineralisiertes Wasser eingebracht, welches zugleich die Bearbeitungspartikel, das heißt das aus der Werkstückwandung herausgelöste Wandmaterial und die diesbezüglichen Partikel oder Teilchen, abtransportiert und/oder die beim Erodierprozess entstehende Wärme abführt.

Verfahrensgemäß wird mittels der erfindungsgemäß ausgestalteten in ein hohlzylindrisches Werkstück eingebrachten Erodiervorrichtung durch ein außerhalb der Mittelachse des Rohres befindliches zweites AntriebsmittelA2 die Elektrode E in das Werkstück W eingeschwenkt und mittels eines ersten Antriebsmittels A1, dessen Drehachse mittig zur Werkstückachse, insbesondere Rohrachse, liegt, ermöglicht eine Drehbewegung der Elektrode im zu bearbeitenden Werkstück um 360° und damit einen kompletten Umfangsschnitt.

Zur Steuerung und Kontrolle sowohl des Erodier- und/oder Trennprozesses sowie insbesondere der jeweilig eingesetzten Antriebsmittel A1, A2 ist eine Steuerungsvorrichtung vorgesehen, welche mit verschiedenen Messeinrichtungen und Sensoranordnungen zusammenwirkt und/oder eine Remote- beziehungsweise Fernsteuerung der Erodiervorrichtung sowie des eigentlichen Erodierprozesses über dafür vorgesehene Schnittstellen und Bedienelemente ermöglicht und erlaubt.

Der Antriebbeider Antriebswellen AW1, AW2 der Antriebseinrichtungen A1, A2 beziehungsweise Antriebsmittel muss gesteuert erfolgen, um den Bearbeitungsprozess kontrolliert und exakt durchführen zu können, was z.B. durch Schrittmotoren und entsprechenden Getriebeuntersetzungen bewirkbar ist.

Die Bestimmung und Auswertung der Winkellagen und Bewegungssteuerung der Antriebsmittel sowie der Antriebswellen sowie der Elektrode wird mittels an sich bekannter Messeinrichtungen - mit Messmitteln, wie Drehgeber oder Winkellagegeber, wiebeispielsweise Encoder, Resolver, Potentiometergeber, Inkrementalgeber, Absolutwertgeber,Tacho durchgeführt, welche an geeigneter Position an den Antriebsmitteln angeordnet sind.

Zur Verarbeitung der bereitgestellten Informationen und Daten umfasst die Steuereinrichtung wenigstens eine Datenverarbeitungseinrichtung mit Datenspeicher. Vorteilhaft kann vorgesehen sein, dass die verschiedenen eingelesenen Informationen und Messdaten während der Verfahrensausführung zeitaufgelöst protokolliert und aufgezeichnet werden.

Verfahrens- und vorrichtungsgemäß können die beiden Antriebseinheiten beziehungsweise Antriebsmittel A1, A2 und Wellen AW1, AW2 dabei voneinander unabhängig und verschieden angesteuert werden, wodurch ganz unterschiedliche Bearbeitungsschritte und Schnitte bewirkbar sind. Hierbei ergeben sich folgende Schnittmöglichkeiten:
1. Ein kompletter Einstich durch die Rohrwandung und dann der anschließende axiale Umfangsschnitt;
2. Ein axialer Schnitt mit einer Zustellung in radialer Richtung, wobei die radiale Zustellung hierbei kontinuierlich geschehen beziehungsweise durchgeführt werden kann, so dass die Schnittlinie in diesem Fall letztlich einer Spirale gleicht;
3. Sie kann aber auch nur nach bestimmten Winkeln geschehen, wobei immer ein kompletter Umfangsschnitt, wie beispielsweise ein Winkelschritt von 360°, mit gleichem Außendurchmesser durchgeführt und erst dann wird die Einstichtiefe weiter vergrößert wird, so dass der Abtrag im Grunde nach Schichten beziehungsweise in mehreren Schichten erfolgt;
4. Sie kann auch wie bei Punkt 1 zuerst komplett in radialer Richtung erfolgen, wobei dann ein Herausfahren, ein Verdrehen in axialer Richtung und dann wieder ein Einstich wie zuvor erfolgt beziehungsweise durchgeführt wird.

Auch sind Kombinationen aller genannten Möglichkeiten realisier- und bewirkbar. Wie beispielsweise ein vollständiger Einstich und dann ein folgender Spiralschnitt.

Die Erkennung und Detektion des kompletten Durchschnittes kann auf folgende Arten durchgeführt werden beziehungsweise erfolgen:
1. Bei bekanntem Abbrand ist die Einstichtiefe, welche eine Funktion von Drehwinkel und Elektrodengröße beziehungsweise bei Ring- oder Scheibenelektroden Elektrodenradius oder -durchmesser darstellt, durch den Drehwinkel bestimmt, welcher durch ein geeignetes Messmittel am jeweiligen Antriebsmittel A1,A2 erfolgen kann. An der Drehachse D2 ist ebenfalls ein Messmittel, beispielsweise ein Drehgeber, angebracht, mit dessen Hilfe die Winkellage bestimmt werden kann. Somit arbeitet dieses Erodierverfahren mit den Messmitteln an den beiden Drehachsen zusammen,
2. durch ein Messverfahren wie Ultraschall oder Wirbelstrom,
3. durch die Frequenzänderung des Werkstückes bei erfolgtem Durchschnitt,
4. durch ein bildgebendes Verfahren wie zum Beispiel mit Hilfe eines Endoskopes,
5. durch die Erodierparameter, da sich hierbei z.B. der Stromfluss bei erfolgreichem Durchschnitt ändert.

Ist die erfolgreiche Durchtrennung des Rohres sichergestellt, so werden die Verspannungen V1 und V2der Erodiervorrichtung gelöst, die Wasserzufuhr beziehungsweise Zufuhr des Dielektrikums wird abgestellt und die Vorrichtung wieder aus dem Rohr entfernt. Dies erfolgt also in umgekehrter Reihenfolge wie die Installation.

Die vorliegende Erfindung umfasst dabei auch beliebige Kombinationen bevorzugter Ausführungsformen sowie einzelner Ausgestaltungsmerkmale oder Weiterbildungen, sofern diese sich nicht gegenseitig ausschließen.

## Patentansprüche

1. Erodiervorrichtung zur Bearbeitung eines hohlzylindrischen Werkstücks, welches längserstreckt und tubus- oder zylinderartig ausgebildet ist, wobei wenigstens zwei rotatorisch wirkende Antriebsmittel (A1, A2) mit jeweils einer Antriebswelle (AW1, AW2) sowie eine mit den Antriebsmitteln (A1, A2) zusammenwirkende ring- oder scheibenartig ausgebildete Erodierelektrode (E) vorgesehen sind, wobei das wenigstens jeweils eine erste (A1) und zweite (A2) Antriebsmittel und deren Symmetrie- oder Drehachsen (D1, D2) radial beziehungsweise seitlich versetzt zueinander angeordnet sind und das zweites Antriebsmittel (A2) exzentrisch und kraftschlüssig mit der Antriebswelle (AW1) eines ersten Antriebsmittels (A1) verbunden oder an dieser angeordnet und mit dieser gekoppelt ist, und die Erodierelektrode (E) exzentrisch und kraftschlüssig mit der Antriebswelle (AW2) des zweiten Antriebsmittels (A2) verbunden und an dieser angeordnet und/oder mit dieser gekoppelt ist, wobei Antriebsmittel (A1, A2) und Erodierelektrode (E) in Größe und Ausdehnung auf den Innendurchmesser des zu bearbeitenden Werkstücks (W) angepasst sind, so dass die Vorrichtung in das jeweilige hohlzylindrische Werkstück (W) einführbar und an der jeweilig zu bearbeitenden Stelle oder dem zu bearbeitenden Bereich innerhalb des Werkstücks (W) positionierbar ist, und die Erodierelektrode (E) mittels einer gekoppelten Schwenk- oder Drehbewegung der wenigstens zwei Antriebsmittel (A1, A2) in das Wandungsmaterial des Werkstückes (W) einschwenkbar oder eindrehbar und auf einer vorbestimmbaren Bearbeitungsbahn, welche insbesondere der Innen- oder Außenkontur des Werkstücks folgt, innen durch das Werkstück (W) und dessen Wandungsmaterial hindurch- oder entlang bewegbar und mittels EDM-Verfahren ein Materialabtrag oder Schnitt im Wandmaterial des Werkstücks (W) bewirkbar ist, **dadurch gekennzeichnet, dass** wenigstens zwei Verspannvorrichtungen (V1, V2) vorgesehen sind, welche in Längsrichtung zu beiden Seiten der Erodierelektrode (E) und damit des eigentlichen Bearbeitungsbereiches angeordnet sind und mit welchen die Vorrichtung sowie insbesondere die Antriebe beziehungsweise Antriebsmittel (A1, A2) und die Elektrode (E) in Längsrichtung beziehungsweise axialer Richtung verrückungsfest im Werkstück haltbar und mit diesem verspannbar sind, so dass ein Verformen des Werkstückes durch den Bearbeitungsprozess und damit ein Einklemmen der Elektrode (E) beim Erodiervorgang und insbesondere in der Endphase des Erodierprozesses vermieden und somit ein genaues und störungsfreies Arbeiten, insbesondere Trennen, bewirkbar und gewährleistet ist, wobei eine jeweilige Verspannvorrichtung drei oder mehr Spannbacken, aufweist, welche elektromechanisch radial nach Außen drückbar sind, so dass die Vorrichtung sicher im Werkstück verspannt und gehalten ist.

2. Erodiervorrichtung nach Anspruch 1, **dadurch gekennzeichnet, dass** die Durchmesser der wenigstens zwei Antriebsmittel (A1, A2) sowie der Erodierelektrode (E) auf die lichte Weite und/oder den Innendurchmesser des zu bearbeitenden hohlzylindrischen Werkstücks (W) angepasst sind.

3. Erodiervorrichtung nach einem der vorhergehenden Ansprüche, **dadurch gekennzeichnet, dass** wenigstens ein Antriebsmittel (A1, A2) dabei als elektromechanischer Antrieb, insbesondere als Servoantrieb und/oder Drehantrieb, oder als hydraulischer Antrieb oder als pneumatischer Antrieb ausgebildet ist.

4. Erodiervorrichtung nach einem der vorherigen Ansprüche, **dadurch gekennzeichnet, dass** die Abmessungen der Antriebsmittel (A1, A2) sowie der Erodierelektrode (E) derart aufeinander und das jeweilige hohlzylindrische Werkstück (W) und insbesondere dessen Innendurchmesser oder lichte Weite angepasst sind, dass die Erodiervorrichtung leichtgängig in das hohlzylindrische Werkstück (W), insbesondere ein Rohr oder eine Leitung, einsetzbar und darin bewegbar, insbesondere verschiebbar, und an der zu bearbeitenden Stelle positionierbar ist.

5. Erodiervorrichtung nach einem der vorherigen Ansprüche, **dadurch gekennzeichnet, dass** eine Steuerungseinrichtung vorgesehen ist, mit welcher der jeweilige EDM-Prozesses präzise und effektiv steuerbar und kontrollierbar ist, wobei der EDM Prozess und damit insbesondere auch das Bearbeiten oder Trennen des hohlzylindrischen Werkstückes (W) und insbesondere eines Rohres oder einer Leitung, von innen nach außen bewirkbar und durchführbar ist.

6. Erodiervorrichtung nach einem der vorherigen Ansprüche, **dadurch gekennzeichnet, dass** wenigstens eine Mess- oder Sensoranordnung vorgesehen ist, mit welcher der Fortschritt oder Verlauf des jeweiligen Bearbeitungs- oder Trennprozesses und insbesondere der erfolgreiche Durchschnitt ermittel- und erfassbar ist, wobei die Erfassung und Bestimmung anhand von EDM-Parametern, wie beispielsweise Strom, Spannung, Abtragsrate, Materialpaarung von Elektrode/Werkstück, Beschaffenheit des verwandten Dielektrikums und dergleichen und/ oder rein Visuell, mittels optischer Überwachungseinrichtungen, wie insbesondere einer Kamera, und/oder durch die Änderung der Eigenfrequenz des Werkstückes, insbesondere des Rohres oder der Leitung, und/oder durch das Wirbelstromverfahren bewirkt ist.

7. Erodiervorrichtung nach einem der vorherigen Ansprüche, **dadurch gekennzeichnet, dass** sie zur Ausführung des Verfahrens nach einem der Ansprüche 8 bis 10 eingerichtet ist.

8. Erodierverfahren zur Bearbeitung eines hohlzylindrischen Werkstücks und insbesondere von Rohren oder Leitungen, wobei wenigstens eine Erodiervorrichtung nach einem der Ansprüche 1 bis 7 an den zu bearbeitenden Bereich, insbesondere den zu trennenden Bereich oder die vorbestimmte Trennstelle, innen durch das jeweilige hohlzylindrische Werkstück (W), insbesondere das Rohr oder die Leitung, gebracht oder bewegt und dort positioniert wird, wobei der Bearbeitungs- oder Trennprozess mittels EDM-Verfahren sicher durchgeführt wird und eine prozess- oder bearbeitungsbedingte Verformung und Beschädigung des jeweiligen Rohr- oder Leitungsbereichs vermieden oder zumindest minimiert wird, indem die Erodiervorrichtung mittels zweier Verspannvorrichtungen (V1, V2) an wenigstens zwei Stellen nämlich jeweils vor und hinter der Bearbeitungsstelle oder dem Erodierspalt (ES) im hohlzylindrischen Werkstück (W) verrückungsfest verspannt und die Erodierelektrode (E) mittels wenigstens zweier gekoppelter Schwenkbewegungen in die Wandung des Werkstückes eingeschwenkt und auf einer vorbestimmbaren Bearbeitungsbahn, welche insbesondere der Innen- oder Außenkontur des Werkstücks (w) folgt, durch das Wand- oder Wandungsmaterial hindurch oder an dem Wandungsmaterial entlang bewegt wird.

9. Erodierverfahren nach Anspruch 8, **dadurch gekennzeichnet, dass** die beiden gekoppelten Drehbewegungen unabhängig voneinander ausführbar sind und die Antriebseinheiten oder Antriebsmittel (A1, A2) voneinander unabhängig und verschieden ansteuerbar sind, wodurch ganz unterschiedliche Bearbeitungsschritte und Schnitte bewirkbar sind und sich die folgenden Schnittmöglichkeiten ergeben, wobei
a) ein kompletter Einstich durch die Werkstückwandung oder Rohrwandung und dann der anschließende axiale Umfangsschnitt durchführbar ist, oder
b) ein axialer Schnitt mit einer Zustellung in radialer Richtung durchführbar ist, wobei die radiale Zustellung kontinuierlich bewirkbar oder durchführbar ist, so dass die Schnittlinie letztlich einer Spirale gleicht, oder
c) ein axialer Schnitt mit einer Zustellung in radialer Richtung durchführbar ist, wobei die radiale Zustellung nach bestimmten Winkeln bewirkt wird, wobei immer ein kompletter Umfangsschnitt, wie insbesondere ein Winkelschritt von 360°, mit gleichem oder identischem Außendurchmesser durchgeführt und erst nach dem jeweiligen Umfangsschnitt die Einstichtiefe weiter vergrößert oder erhöht wird, so dass der Abtrag im Grunde nach Schichten beziehungsweise in mehreren Schichten erfolgt, oder
d) ein kompletter Einstich durch die Werkstückwandung oder Rohrwandung durchführbar ist und der Schnitt damit zuerst komplett in radialer Richtung bewirkbar ist, wobei dann ein Herausfahren, ein Verdrehen in axialer Richtung und dann wieder ein Einstich wie zuvor erfolgt oder durchführbar oder bewirkbar ist, oder
e) eine Kombination mehrerer der unter a) bis d) angegebenen Schnittmöglichkeiten durchführbar und bewirkbar ist, wie insbesondere ein vollständiger Einstich und ein sich daran anschließender Spiralschnitt.

10. Erodierverfahren nach einem der Ansprüche 8 oder 9, **dadurch gekennzeichnet, dass** die Erkennung und Detektion des kompletten Durchschnittes auf wenigstens eine oder eine Kombination der nachfolgend angegebenen Arten durchgeführt wird, wobei
a) bei bekanntem Abbrand die Einstichtiefe als Funktion von Drehwinkel und Elektrodengröße oder Elektrodendurchmesser oder -radius durch den jeweiligen Drehwinkel bestimmbar ist, welcher durch ein geeignete Messmittel, insbesondere Drehgeber oder Winkellagegeber, an den jeweiligen Antriebsmitteln (A 1, A2) erfass- und bestimmbar, insbesondere messbar, ist,
b) die Eintauchtiefe und/oder der Durchschnitt auch mittels Messverfahren wie Ultraschallmessung oder Wirbelstrommessung ermittelbar ist,
c) die Eintauchtiefe und der Durchschnitt durch die Frequenzänderung des Werkstückes, insbesondere bei erfolgtem Durchschnitt, erfassbar ist,
d) die Eintauchtiefe und/oder der Durchschnitt durch eine bildgebendes Verfahren, insbesondere mittels eines Endoskopes oder einer an der Erodiervorrichtung angeordneten Kamera, erfassbar ist,
e) die Eintauchtiefe und der Durchschnitt durch Analyse der Erodierparameter ermittelbar und detektierbar ist, da sich insbesondere der Stromfluss bei erfolgreichem Durchschnitt signifikant verändert.

## Claims

1. Erosion device for machining a hollow-cylindrical workpiece, which device is elongated and formed in the manner of a tube or cylinder, wherein at least two rotationally acting drive means (A1, A2), each with a drive shaft (AW1, AW2), and also an erosion electrode (E), interacting with the drive means (A1, A2) and formed in the manner of a ring or disc, are provided, wherein the respectively at least one first (A1) and second (A2) drive means and the axes of symmetry or axes of rotation (D1, D2) thereof are arranged radially or laterally offset in relation to one another and the second drive means (A2) is connected eccentrically and frictionally to the drive shaft (AW1) of a first drive means (A1) or is arranged thereon and coupled thereto, and the erosion electrode (E) is eccentrically and frictionally connected to the drive shaft (AW2) of the second drive means (A2) and arranged thereon and/or coupled thereto, wherein the drive means (A1, A2) and the erosion electrode (E) are adapted in size and extent to the internal diameter of the workpiece (W) to be machined, so that the device can be introduced into the respective hollow-cylindrical workpiece (W) and can be positioned at the location respectively to be machined or the region to be machined inside the workpiece (W), and the erosion electrode (E) can be pivoted or can be rotated by means of a coupled pivoting or rotating movement of the at least two drive means (A1, A2) into the material of the walling of the workpiece (W) and can be moved on the inside through or along the workpiece (W) and the material of the walling therof on a predeterminable machining path, which in particular follows the inner and/or outer contour of the workpiece, and a removal of material or cut in the material of the wall of the workpiece (W) can be brought about by means of EDM methods, **characterized in that** at least two clamping devices (V1, V2) are provided, which devices are arranged on both sides, in the longitudinal direction, of the erosion electrode (E), and consequently of the actual machining region, and with which the device, and also in particular the drives or drive means (A1, A2) and the electrode (E), can be kept immovably fixed in the workpiece in the longitudinal direction or axial direction and can be clamped thereto, so that deforming of the workpiece by the machining process, and consequently jamming of the electrode (E) during the erosion operation, and in particular in the end phase of the erosion process, are avoided, and consequently exact and trouble-free working, in particular separating, can be brought about and/or is ensured, wherein a respective clamping device has three or more clamping jaws which can be electromechanically pressed radially outwards so that the device is securely clamped and held in the workpiece.

2. Erosion device according to Claim 1, **characterized in that** the diameters of the at least two drive means (A1, A2) and of the erosion electrode (E) are adapted to the clear width and/or the internal diameter of the hollow-cylindrical workpiece (W) to be machined.

3. Erosion device according to one of the preceding claims, **characterized in that** at least one drive means (A1, A2) is in this case formed as an electromechanical drive, in particular as a servo drive and/or rotary drive, or as a hydraulic drive or as a pneumatic drive.

4. Erosion device according to one of the preceding claims, **characterized in that** the dimensions of the drive means (A1, A2) and also of the erosion electrode (E) are adapted to one another and the respective hollow-cylindrical workpiece (W), and in particular the internal diameter or clear width thereof, in such a way that the erosion device can be smoothly inserted into the hollow-cylindrical workpiece (W), in particular a pipe or a line, and can be moved therein, in particular can be displaced, and can be positioned at the location to be machined.

5. Erosion device according to one of the preceding claims, **characterized in that** a control device is provided, with which the respective EDM process can be precisely and effectively controlled and monitored, wherein the EDM process, and consequently in particular also the machining or separating of the hollow-cylindrical workpiece (W), and in particular a pipe or a line, can be brought about and can be carried out from the inside to the outside.

6. Erosion device according to one of the preceding claims, **characterized in that** at least one measuring or sensor arrangement is provided, by which the progress or progression of the respective machining or separating process, and in particular the successful through-cut, can be determined and can be sensed, wherein the sensing and determination is brought about on the basis of EDM parameters, such as for example current, voltage, removal rate, material pairing of the electrode/workpiece, nature of the dielectric used and the like, and/or purely visually, by means of optical monitoring devices, such as in particular a camera, and/or by the changing of the natural frequency of the workpiece, in particular the pipe or the line, and/or by the eddy current method.

7. Erosion device according to one of the preceding claims, **characterized in that** it is designed for performing the method according to one of Claims 8 to 10.

8. Erosion method for machining a hollow-cylindrical workpiece, and in particular pipes or lines, wherein at least one erosion device according to one of Claims 1 to 7 is brought or moved to the region to be machined, in particular the region to be separated or the predetermined separating location, on the inside through the respective hollow-cylindrical workpiece (W), in particular the pipe or the line, and is positioned there, wherein the machining or separating process is dependably carried out by means of EDM methods and process- or machining-dependent deformation of and damage to the respective region of the pipe or line is avoided, or at least minimized, by the erosion device being clamped such that it is immovably fixed in the hollow-cylindrical workpiece (W) by means of two clamping devices (V1, V2) at at least two locations, to be specific respectively in front of and behind the machining location or the erosion gap (ES), and the erosion electrode (E) being pivoted by means of at least two coupled pivoting movements into the walling of the workpiece and being moved through the material of the wall or walling or along on the material of the walling on a predeterminable machining path, which in particular follows the inner or outer contour of the workpiece (W).

9. Erosion method according to Claim 8, **characterized in that** the two coupled rotating movements can be performed independently of one another and the drive units or drive means (A1, A2) can be activated independently and differently from one another, whereby quite different machining steps and cuts can be brought about and the following cutting possibilities are obtained, wherein
a) a complete plunge cut through the walling of the workpiece or walling of the pipe and then the subsequent axial circumferential cut can be carried out, or
b) an axial cut with an infeed in the radial direction can be carried out, wherein the radial infeed can be brought about or can be carried out continuously, so that the cutting line ultimately resembles a spiral, or
c) an axial cut with an infeed in the radial direction can be carried out, wherein the radial infeed is brought about on the basis of certain angles, wherein a complete circumferential cut, such as in particular an angular cut of 360°, is always carried out with the same or identical external diameter and the depth of the plunge cut is only made greater or further increased after the respective circumferential cut, so that the removal takes place essentially by layers or in multiple layers, or
d) a complete plunge cut through the walling of the workpiece or walling of the pipe can be carried out and the cut can consequently first be brought about completely in the radial direction, wherein then a moving-out operation, a turning in the axial direction and then again a plunge cut take place, or can be carried out or can be brought about, as before, or
e) a combination of a number of cutting possibilities specified under a) to d) can be carried out and can be brought about, such as in particular a complete plunge cut and a then-following spiral cut.

10. Erosion method according to either of Claims 8 and 9, **characterized in that** the identification and detection of the complete through-cut is carried out in at least one or a combination of the ways specified below, wherein
a) in the case of the known burning away, the depth of the plunge cut, as a function of the angle of rotation and electrode size or the electrode diameter or radius, can be determined by the respective angle of rotation, which can be sensed and determined, in particular can be measured, by a suitable measuring means, in particular rotary transducer or angular position transducer, on the respective drive means (A1, A2),
b) the plunging depth and/or the through-cut can also be determined by means of measuring methods, such as ultrasonic measurement or eddy current measurement,
c) the plunging depth and the through-cut can be sensed by the change in frequency of the workpiece, in particular when the through-cut has taken place,
d) the plunging depth and/or the through-cut can be sensed by an imaging method, in particular by means of an endoscope or a camera arranged on the erosion device,
e) the plunging depth and the through-cut can be determined and can be detected by analysis of the erosion parameters, since in particular the current flow changes significantly when there is a successful through-cut.

## Revendications

1. Dispositif d'érosion destiné à traiter une pièce à usiner cylindrique creuse, qui est réalisée de manière à être étendue longitudinalement et à présenter une forme tubulaire ou cylindrique, dans lequel il est prévu au moins deux moyens d'entraînement à action rotative (Al, A2) comportant respectivement un arbre d'entraînement (AW1, AW2) ainsi qu'une électrode d'érosion (E) coopérant avec les moyens d'entraînement (A1, A2) et réalisées sous forme d'anneau ou de disque, dans lequel les au moins un premier (A1) et deuxième (A2) moyens d'entraînement respectifs et leurs axes de symétrie ou de rotation (D1, D2) sont disposés de manière décalée radialement ou latéralement l'un par rapport à l'autre et le deuxième moyen d'entraînement (A2) est relié de manière excentrique et par complémentarité de force à l'arbre d'entraînement (AW1) d'un premier moyen d'entraînement (A1) ou est disposé sur celui-ci et est couplé à celui-ci, et l'électrode d'érosion (E) est reliée de manière excentrique et par complémentarité de force à l'arbre d'entraînement (AW2) du deuxième moyen d'entraînement (A2) et est disposé sur celui-ci et/ou est couplé à celui-ci, dans lequel les moyens d'entraînement (Al, A2) et l'électrode d'érosion (E) sont adaptés en taille et en extension au diamètre intérieur de la pièce à usiner (W) à traiter de manière à ce que le dispositif puisse être introduit dans la pièce à usiner (W) cylindrique creuse respective et à ce qu'il puisse être positionné à l'emplacement à traiter respectif ou sur la zone à traiter à l'intérieur de la pièce à usiner (W), et l'électrode d'érosion (E) peut être amenée à pivoter ou à tourner à l'intérieur du matériau de paroi de la pièce à usiner (W) au moyen d'un mouvement de pivotement ou de rotation couplé des au moins deux moyens d'entraînement (A1, A2) et peut être déplacé sur un trajet de traitement prédéterminé qui suit notamment le contour intérieur ou extérieur de la pièce à usiner, à travers ou le long de l'intérieur de la pièce à usiner (W) et de son matériau de paroi et un enlèvement de matériau ou une découpe peut être réalisé dans le matériau de paroi de la pièce à usiner (W) au moyen de procédés EDM,
**caractérisé en ce qu'**il est prévu au moins deux dispositifs de précontrainte (V1, V2) qui sont disposés dans la direction longitudinale des deux côtés de l'électrode d'érosion (E) et par conséquent de la zone de traitement proprement dite et au moyen desquels le dispositif ainsi qu'en particulier, l'entraînement ou les moyens d'entraînement (A1, A2) et l'électrode (E) peuvent être immobilisés dans la direction longitudinale ou dans la direction axiale dans la pièce à usiner et pouvant être soumis à une précontrainte avec celle-ci de manière à ce qu'une déformation de la pièce à usiner provoquée par le processus de traitement et par conséquent, à ce qu'un serrage de l'électrode (E) provoqué par le processus d'érosion, et en particulier, provoqué par la phase finale du processus d'érosion, soient évités et par conséquent, de manière à provoquer et garantir un traitement, en particulier une séparation, précis et non perturbé, dans lequel un dispositif de précontrainte respectif comporte trois mâchoires de serrage ou plus qui peuvent être sollicitées radialement vers l'extérieur électromécaniquement de manière à ce que le dispositif soit précontraint et maintenu de manière sûre dans la pièce à usiner.

2. Dispositif d'érosion selon la revendication 1, **caractérisé en ce que** le diamètre des au moins deux moyens d'entrainement (A1, A2) et de l'électrode d'érosion (E) est adapté à la dimension interne et/ou au diamètre intérieur de la pièce à usiner (W) cylindrique creuse à traiter.

3. Dispositif d'érosion selon l'une quelconque des revendications précédentes, **caractérisé en ce que** l'au moins un moyen d'entraînement (A1, A2) est ainsi réalisé sous la forme d'un entraînement électromécanique, en particulier sous la forme d'un servomoteur et/ou d'un système d'entraînement en rotation, ou sous la forme d'un entraînement hydraulique, ou sous la forme d'un entraînement pneumatique.

4. Dispositif d'érosion selon l'une quelconque des revendications précédentes, **caractérisé en ce que** les dimensions des moyens d'entraînement (A1, A2) et de l'électrode d'érosion (E) sont adaptées les unes aux autres et **en ce que** la pièce à usiner (W) cylindrique creuse respective et en particulier son diamètre intérieur ou sa dimension interne sont adaptés, **en ce que** le dispositif d'érosion peut être déplacé librement dans la pièce à usiner (W) cylindrique creuse, en particulier un tube ou un conduit, et peut être déplacée dans celui-ci, et en particulier être amenée à y coulisser, et peut être positionnée à l'emplacement à traiter.

5. Dispositif d'érosion selon l'une quelconque des revendications précédentes, **caractérisé en ce qu'**il est prévu un dispositif de commande au moyen duquel le processus EDM respectif peut être commandé et contrôlé de manière précise et efficace, dans lequel le processus EDM et par conséquent, en particulier, le traitement ou la séparation de la pièce à usiner (W) cylindrique creuse, et en particulier d'un tube ou d'un conduit, peut être réalisé et mis en oeuvre de l'intérieur vers l'extérieur.

6. Dispositif d'érosion selon l'une quelconque des revendications précédentes, **caractérisé en ce qu'**il est prévu au moins un système de mesure ou de détection au moyen duquel la progression ou le déroulement du processus de traitement ou de séparation respectif, et en particulier la découpe traversante réussie, peut être déterminé et détecté, dans lequel la détection et la détermination sont effectuées sur la base de paramètres EDM, comme par exemple le courant, la tension, la fréquence d'enlèvement, l'association de matériaux de l'électrode/de la pièce à usiner, la consistance du diélectrique utilisé ou autre et/ou de façon purement visuelle au moyen de dispositifs de surveillance optiques, en particulier comme une caméra, et/ou par modification de la fréquence propre de la pièce à usiner, en particulier du tube ou du conduit, et/ou par le procédé par courant de Foucault.

7. Dispositif d'érosion selon l'une quelconque des revendications précédentes, **caractérisé en ce qu'**il est approprié pour la mise en oeuvre du procédé selon l'une quelconque des revendications 8 à 10.

8. Procédé d'érosion destiné à traiter une pièce à usiner cylindrique creuse et en particulier des tubes et des conduits, dans lequel au moins un dispositif d'érosion selon l'une quelconque des revendications 1 à 7 est monté ou déplacé sur la zone à traiter, en particulier la zone à séparer ou l'emplacement de séparation prédéterminé, à travers l'intérieur de la pièce à usiner (W) cylindrique creuse respective, en particulier le tube ou le conduit, et être positionné sur celle-ci, dans lequel le processus de traitement ou de séparation est effectué de manière sûre au moyen d'un procédé EDM et une déformation ou un endommagement, induit par le processus ou le traitement de la zone respective du tube ou du conduit, est évité ou au moins minimisé, en faisant en sorte que le dispositif d'érosion soit précontraint à l'état immobilisé au moyen de deux dispositifs de précontrainte (V1, V2) sur au moins deux emplacements, à savoir respectivement à l'avant et à l'arrière de l'emplacement de traitement ou de la fente d'érosion (ES) dans la pièce à usiner (W) cylindrique creuse et que l'électrode d'érosion (E) soit amenée à pivoter au moyen d'au moins deux mouvements de pivotement couplés à l'intérieur de la paroi de la pièce à usiner et soit déplacée longitudinalement sur un trajet de traitement pouvant être prédéterminé qui suit en particulier le contour intérieur ou extérieur de la pièce à usiner (W), à travers le matériau de paroi ou de cloison ou sur le matériau de paroi.

9. Procédé d'érosion selon la revendication 8, **caractérisé en ce que** les deux mouvements de rotation couplés peuvent être réalisés indépendamment l'un de l'autre et **en ce que** les unités d'entraînement ou les moyens d'entraînement (A1, A2) peuvent être commandés de manière indépendante et différente l'un de l'autre, d'où il résulte que des étapes de traitement et des découpes entièrement différentes peuvent être effectuées, cela conduisant aux possibilités de découpe suivantes :
a) une perforation traversant entièrement la paroi de la pièce à usiner ou la paroi du tube et la découpe circonférentielle axiale peut ensuite être effectuée, ou
b) une découpe axiale peut être effectuée avec une introduction en direction radiale, dans lequel l'introduction radiale peut être réalisée ou effectuée en continu de manière à ce que la ligne de découpe soit finalement identique à une spirale, ou
c) une découpe axiale avec une introduction en direction radiale peut être effectuée, dans lequel l'introduction radiale est réalisée selon des angles déterminés, dans lequel une découpe circonférentielle complète, comme par exemple un pas angulaire de 360°, peut toujours être effectuée avec un diamètre extérieur constant ou identique et la profondeur de perforation n'est encore augmentée ou accrue qu'après la découpe circonférentielle respective de manière à ce que l'enlèvement soit en général effectué selon les couches ou en plusieurs couches, ou
d) une perforation complète à travers la paroi de la pièce à usiner ou la paroi du tube peut être effectuée et la découpe peut ainsi être réalisée en premier lieu entièrement en direction radiale, dans lequel une sortie, une mise en rotation en direction axiale puis de nouveau une perforation est ensuite effectuée ou peut ensuite être effectuée ou réalisée comme précédemment, ou
e) une combinaison de plusieurs des possibilités de découpe indiquées en a) à d) peut être effectuée ou réalisée, comme en particulier une perforation complète suivie d'une découpe en spirale.

10. Procédé d'érosion selon l'une quelconque des revendications 8 ou 9, **caractérisé en ce que** l'identification et la détection de la découpe traversante complète est effectuée d'au moins une manière ou par une combinaison de techniques indiquées ci-après, à savoir :
a) lors d'une usure connue, la profondeur de perforation peut être déterminée sous la forme d'une fonction de l'angle de rotation et de la taille de l'électrode ou du diamètre ou du rayon de l'électrode au moyen de l'angle de rotation respectif, qui peut être détecté et déterminé, en particulier mesuré à l'aide d'un moyen de mesure approprié, en particulier d'un codeur de rotation ou d'un codeur de position angulaire, aux moyens d'entrainement respectifs (A1, A2),
b) la profondeur de perforation et/ou la découpe traversante peut également être déterminée par un procédé de mesure tel qu'une mesure par ultrasons ou une mesure par courant de Foucault,
c) la profondeur de perforation et la découpe traversante peuvent être détectées par la variation de fréquence de la pièce à usiner, en particulier lorsque la découpe traversante est effectuée,
d) la profondeur de perforation et/ou la découpe traversante peut/peuvent être détectée(s) par un procédé de génération d'image, en particulier au moyen d'un endoscope ou d'une caméra disposée sur le dispositif d'érosion,
e) la profondeur de perforation et la découpe traversante peuvent être déterminées et détectées par analyse des paramètres d'érosion en raison du fait que le flux de courant, en particulier, varie de manière significative lors de la réussite de la découpe traversante.
